Europäisches Patentamt

European Patent Office

Office européen des brevets

(11) Veröffentlichungsnummer : **0 095 561**
**B1**

# EUROPÄISCHE PATENTSCHRIFT

(45) Veröffentlichungstag der Patentschrift :
12.11.86

(21) Anmeldenummer : 83102294.2

(22) Anmeldetag : 09.03.83

(51) Int. Cl.⁴ : **F 16 C 19/08**, B 62 K 19/34

(54) **Wälzlagerung.**

(30) Priorität : 17.05.82 DE 3218546

(43) Veröffentlichungstag der Anmeldung :
07.12.83 Patentblatt 83/49

(45) Bekanntmachung des Hinweises auf die Patenterteilung : 12.11.86 Patentblatt 86/46

(84) Benannte Vertragsstaaten :
BE CH FR GB IT LI NL

(56) Entgegenhaltungen :
DE-A- 2 008 385
US-A- 1 457 954
US-A- 1 622 483

(73) Patentinhaber : FAG KUGELFISCHER GEORG SCHÄ-
FER Kommanditgesellschaft auf Aktien
Georg-Schäfer-Strasse 30
D-8720 Schweinfurt (DE)

(72) Erfinder : Hofmann, Heinrich
Elsa-Brändström-Strasse 43
D-8720 Schweinfurt (DE)
Erfinder : Treutlein, Dieter
Goethestrasse 18
D-8722 Grafenrheinfeld (DE)

(74) Vertreter : Rehmann, Klaus H.
Postfach 1260 (FAG) Hauptbahnhofstrasse
D-8720 Schweinfurt (DE)

## Beschreibung

Die Erfindung bezieht sich auf eine Wälzlagerung nach dem Oberbegriff des ersten Anspruchs.

Eine Lagerung der obengenannten Art ist beispielsweise aus dem DE-A-2 008 385 bekannt. Mit der hier gezeigten, zwischen den Außenringen angeordneten Büchse wird einerseits eine Baueinheit erreicht, und andererseits der axiale Abstand der Außenringe festgelegt. Weitere Funktionen erfüllt diese Büchse nicht. Insbesondere ist sie bei der Montage der Kugellager eher hinderlich als nutzbringed. Wenn man nämlich möglichst viele Kugeln im Hinblick auf hohe Belastbarkeit unterbringen will, ist es erforderlich, die Welle gegenüber den Außenringen exzentrisch zu verlagern, um die Kugeln in den dann entstehenden sichelförmigen Raum einbringen und verteilen zu können. Die Montage des ersten Lagers auf der Welle läßt sich dabei noch relativ einfach bewerkstelligen, weil dabei die Büchse weggelassen werden kann. Vor der Montage des zweiten Lagers ist diese aber in jedem Fall anzuordnen. Nach nunmehr erneut erforderlicher exzentrischer Verlagerung der Welle gegenüber den Außenringen können die Kugeln eingefüllt werden. Dies erfolgt zweckmäßigerweise bei senkrecht stehender Welle von oben. Der sichelförmige Raum, in dem die Kugeln von außen eingeführt werden können, ist dabei aber zum Lagerinneren hin ebenfalls offen, so daß die Kugeln aus dem Raum zwischen den Laufbahnen herausfallen. Ein Zusammenbau des Lagers bei senkrechter Welle ist also kaum durchzuführen.

Es ist daher Aufgabe der Erfindung, bei einer Wälzlagerung der obengenannten Art auch die Montage der zweiten Reihe bei senkrecht stehender Welle mit einfachsten Mitteln zu ermöglichen, wobei gleichzeitig der axiale Raum zwischen den Außenringen ausgefüllt sein soll, um eine Abdichtung des Innenraums zu erreichen.

Die Lösung wird durch die kennzeichnenden Merkmale im ersten Anspruch dargelegt. Die Ansprüche 2, 3 und 4 beinhalten spezielle Ausgestaltungen.

Mit Hilfe der speziell ausgebildeten Büchse ist nunmehr eine einfache Montage der Kugeln möglich. Durch Ansätze an der Büchse ergeben sich nämlich Abstützflächen für die Kugeln, wenn sie bei exzentrisch verlagerter Welle in den sichelförmigen Raum eingebracht werden. Vor und bei der zentrischen Verlagerung der Welle werden die Kugeln zwischen den Laufbahnen gehalten und können dann am Umfang verteilt werden. Eine Berührung mit der Büchse erfolgt dann nicht mehr, weil der Ansatz der letzteren, ohne daß die Funktionsfähigkeit darunter leidet, etwas kürzer ausgeführt werden kann, so daß er nicht bis zum Hüllraum der Kugeln reicht. Da die Büchse nicht mehr demontierbar ist, kann sie gleichzeitig die Aufgabe einer Dichtung des Innenraums erfüllen.

Um zu bewirken, daß die Kugeln möglichst nahe im Laufbahnbereich bleiben, ist es zweckmäßig, den Ansatz sichelförmig auszubilden. Seine Breite kann dann besser angepaßt werden. Erforderlichenfalls kann auf der einen Seite der mit den Stirnflächen an den beiden Außenringen anliegenden Büchse auch ein umlaufender Bund vorgesehen werden. Bei dieser Ausführung wird zusätzlich der axiale Abstand der Außenringe festgelegt.

Nach einer weiteren Ausbildung können an einer Stirnseite der Büchse Stege vorgesehen werden, die sich wie bei einem Kammkäfig zwischen die Kugeln erstrecken und damit einen zusätzlichen Käfig überflüssig machen.

Die Erfindung wird anhand von drei Figuren näher erläutert :

Figur 1 zeigt einen Teilquerschnitt durch die Tretlagerung eines Fahrrads.

Figur 2 zeigt eine Seitenansicht der erfindungsgemäßen Büchse.

Figur 3 zeigt eine Stirnflächenansicht der Büchse nach Fig. 2.

Figur 4 zeigt eine Variante zu Fig. 1.

Figur 5 zeigt eine weitere Variante.

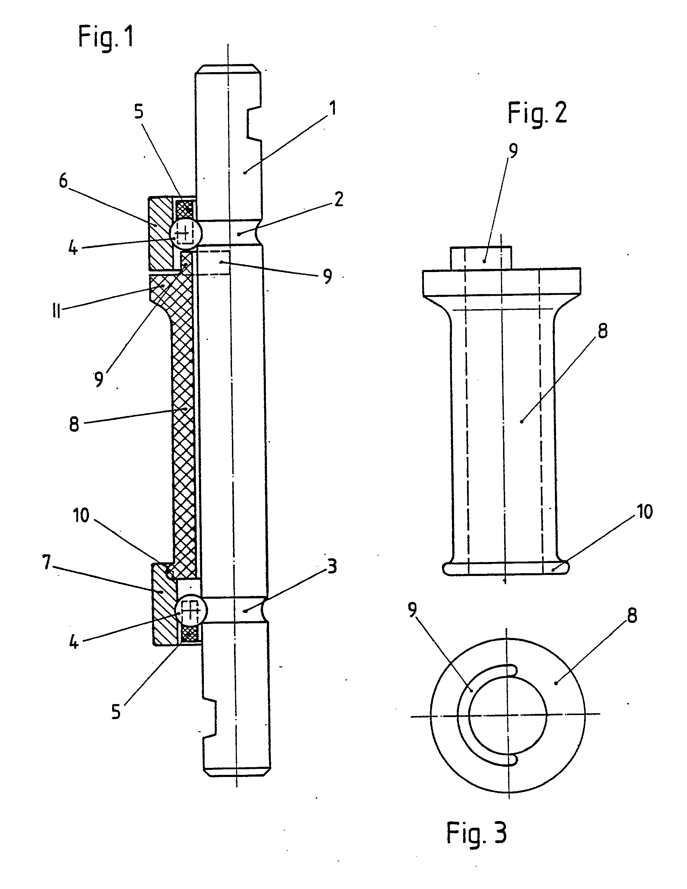

Gemäß Fig. 1 besteht die Tretlagerung eines Fahrrads aus der Welle 1, in die die Laufbahnen 2 und 3 eingearbeitet sind, den Kugeln 4, den Käfigen 5, den beiden Außenringen 6 und 7 sowie der Büchse 8. Letztere besitzt im oberen Teil einen sichelförmigen Ansatz 9, der besser aus Fig. 2 und 3 zu ersehen ist. Mit Hilfe dieses Ansatzes ist nun bei der Montage des Kugellagers auf der gleichen Seite zunächst eine exzentrische Verlagerung von Außenring 6 und Welle 1 möglich, woraufhin die Kugeln bei senkrecht stehender Welle leicht in den ebenfalls sichelförmigen Raum eingefüllt werden können. Dabei verhindert die Büchse 8 mit dem Ansatz 9 ein Herausfallen der Kugeln 4 nach unten. Die weitere Montage erfolgt dann in bekannter Weise...

Beim unteren Lager mit dem Außenring 7, das man bei entfernter Büchse 8 zweckmäßigerweise in bekannte Art vor dem oberen Lager montiert, ist an der Stirnseite der Büchse 8 ein umlaufender Bund 10 vorgesehen.

Über die radial über den Ansatz 9 hinausragenden Stirnflächenabschnitte 11 und den Bund 10 erfolgt hier eine axiale Fixierung der beiden Außenringe 6 und 7. Die Büchse 8 macht keine Relativbewegung zu dem Außenringen 6 und 7.

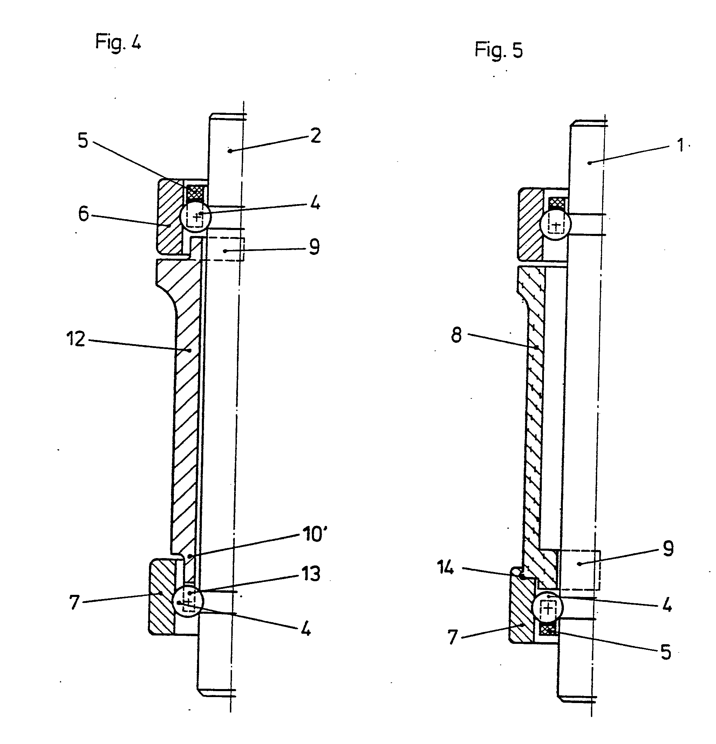

Gemäß Fig. 4 besteht beim oberen Lager die gleiche Ausführung wie beim Lager nach Fig. 1. Beim unteren Lager 7 ergibt sich aber eine Abweichung in der Weise, daß der Ansatz 10' der Büchse 12 etwas verlängert ist und zusätzlich an seiner Stirnseite Stege 13 besitzt, die sich zwischen die Kugeln 4 erstrecken und einen Käfig ersetzen. Die Büchse 12 zeigt die gleichen Relativbewegungen zur Welle 2 und Außenringen 6 und 7 wie der Käfig 5 des Außenringes 6. Ein weiterer Käfig 5 für Außenring 7 wird durch den kammartigen Teil 13 der Büchse 12 ersetzt.

In Fig. 5 ist eine weitere Variante dargestellt. Hier besitzt die Büchse 8 auf der Seite den Bund 14, auf der der Ansatz 9 vorgesehen ist. Dadurch wird die Montage erleichtert, denn es erfolgt eine genaue Zuordnung der Stirnfläche des Ansatzes 9 zu den Kugeln 4, da von der Feststelle Außenring 7/Bund 14 nur wenig Toleranzstellen bis zu dieser Stirnfläche vorhanden sind. Die Kugeln 4 können dadurch den Laufbahnen genauer zugeordnet werden, wodurch die Montage problemloser wird.

## Patentansprüche

1. Wälzlagerung, bestehend aus zwei in Abstand angeordneten Kugellagern z. B. für Wasserpumpen, Fahrradtretkurbeln, Spinnrotoren u. a., wobei die beidseitig hochschultrigen Laufbahnen (2) für die Kugeln (4) in die Welle (1) eingearbeitet sind und zwischen den Außenringen (6, 7) eine Büchse (8) vorgesehen ist, dadurch gekennzeichnet, daß die Büchse (8) zumindest auf einer Stirnseite einen bis nahe an den Hüllkreis der Kugeln (4) sich erstreckenden Ansatz (9) besitzt, der sich über ca. 180° erstreckt und eine maximale Wandstärke aufweist, die gleich oder kleiner ist als der Abstand zwischen der Schultermantelfläche des Außenrings (6) und der Welle (1).

2. Lagerung nach Anspruch 1, dadurch gekennzeichnet, daß der Ansatz (9) sichelförmig ausgebildet ist.

3. Lagerung nach Anspruch 1 oder 2, dadurch gekennzeichnet, daß auf einer Stirnseite der an den beiden Außenringen (6 oder 7) anliegenden Büchse (8) ein umlaufender Bund (10 bzw. 14) vorgesehen ist.

4. Lagerung nach Anspruch 1 oder 2, dadurch gekennzeichnet, daß auf einer Stirnseite der Büchse (12) Stege (13) vorgesehen sind, die sich zwischen die Kugeln (4) bis mindestens zu deren größten Durchmesser erstrecken.

## Claims

1. Rolling bearing mounting, consisting of two ball bearings arranged with a distance between them, e. g. for water pumps, bicycle bottom brackets, spinning rotors etc., where the raceways (2) for the balls (4) are machined into the shaft (1) such that the raceways (2) have high shoulders at both sides and where a sleeve (8) is provided between the outer rings (6, 7), characterized in that the sleeve (8) has at least on one face a neck (9) projecting close to the enveloping area of the balls (4), which extends around approximately 180° of the sleeve bore and has a maximum wall thickness of equal to or smaller than the distance between the shoulder land of the outer ring (6) and the shaft (1).

2. Bearing mounting according to claim 1, characterized in that the neck (9) is sickle shaped.

3. Bearing mounting according to claim 1 or 2, characterized in that on one face of the sleeve (8) which abuts the two outer rings (6 or 7) a collar (10 or 14) is provided which extends all around the sleeve.

4. Bearing mounting according to claim 1 or 2, characterized in that on one face of the sleeve (12) fingers (13) are provided which project between the balls (4) at least to their largest diameter.

## Revendications

1. Palier à roulement comportant deux roulements à billes écartés l'un de l'autre, par exemple pour pompe à eau, pédalier de bicyclette, rotor de machine de filage, dans lequel les chemins de roulements (2) présentant des épaulements élevés sur leurs deux côtés et recevant les billes (4) sont usinés dans l'arbre (1), une entretoise tubulaire (8) étant prévue entre les bagues extérieures (6, 7) des roulements à billes, caractérisé en ce que ladite entretoise (8) présente, au moins sur une de ses faces frontales, une saillie (9) qui avance jusqu'à proximité de la surface-enveloppe des billes (4), qui s'étend sur environ 180°, et dont l'épaisseur maximale est égale ou inférieure à l'écart entre l'arbre (1) et la surface interne de la bague extérieure (6) du roulement à billes.

2. Palier selon la revendication 1, caractérisé en ce que ladite saillie (9) est en forme de croissant.

3. Palier selon la revendication 1 ou 2, caractérisé en ce qu'une nervure périphérique (10, 14) est prévue sur l'un des côtés de l'entretoise qui sont adjacents aux parties frontales des deux bagues extérieures (6, 7) de roulement.

4. Palier selon la revendication 1 ou 2, caractérisé en ce que des barrettes (13) qui avancent entre les billes (4) au moins jusqu'à la ligne centrale du roulement sont prévues sur la face frontale de l'entretoise (12).

Fig. 1

Fig. 2

Fig. 3

Fig. 4

Fig. 5